# EUROPÄISCHE PATENTSCHRIFT

(11) **EP 1 947 477 B1**
(45) Veröffentlichungstag und Bekanntmachung des Hinweises auf die Patenterteilung: **24.06.2009**
(21) Anmeldenummer: 08100151.3
(22) Anmeldetag: 07.01.2008
(51) Int. Cl.: G01S 17/48

(54) **Triangulationssensor mit Entfernungsbestimmung aus Lichtfleckposition und -form**
Triangulation sensor with distance calculator using hot spot position and form
Capteur de triangulation doté d'une détermination d'éloignement à partir de la position et de la forme de la tache lumineuse

(30) Priorität: 20.01.2007 DE 102007003024
(43) Veröffentlichungstag der Anmeldung: 23.07.2008
(73) Patentinhaber: SICK AG, 79183 Waldkirch (DE)
(72) Erfinder: Wüstefeld, Martin, 79350 Sexau (DE)
(74) Vertreter: Hehl, Ulrich

(56) Entgegenhaltungen:
- DE-A1- 10 059 156
- DE-C1- 19 732 376
- US-A- 4 637 715
- US-A- 4 647 193
- US-A- 5 032 023

## Beschreibung

Die Erfindung betrifft einen optoelektronischen Sensor und ein Verfahren zur Erfassung und Abstandsbestimmung eines Objekts nach Anspruch 1 beziehungsweise 10.

Entfernungsmessende Sensoren werden in einem weiten Anwendungsfeld benötigt. Dazu zählt die Sicherheitstechnik, die Diebstahlsicherung und die Automatisierungstechnik. Gattungsgemäße optoelektronische Sensoren werden auch als Triangulationssensoren oder Reflexionslichttaster bezeichnet. Dabei sendet ein Lichtsender Licht aus, das nach Reflexion an einem Objekt in einem ortsauflösenden Empfänger ausgewertet wird, um aus der bekannten Geometrie des Sensors Rückschlüsse auf die Objektentfernung zu ziehen.

Im Stand der Technik wird der Triangulation zur Entfernungsbestimmung die Lichtfleckposition des remittierten Lichts auf dem ortsauflösenden Empfänger über eine Schwerpunktsbestimmung zu Grunde gelegt. Um eine genau Positionsbestimmung zu ermöglichen, muss eine Abbildungsoptik herkömmlich den Lichtfleck bei jeder Entfernung scharf auf dem Lichtempfänger abbilden. Hierfür werden die Abbildungsoptik und der Lichtempfänger gemäß der Scheimpflugregel angeordnet, nach der sich die Ebene des Überwachungsbereiches, die Ebene der Abbildungsoptik und die Ebene des Lichtempfängers in einer gemeinsamen Geraden schneiden. Genau dann wird der Überwachungsbereich scharf auf dem Lichtempfänger abgebildet.

Zudem muss die Positionsauflösung über einen großen Dynamikbereich hinreichend genau sein. Die Dynamikanforderung ist keine geringe, weil durch unterschiedliche Reichweiten, unterschiedliche Reflexionseigenschaften der Objekte und unterschiedliches Umgebungslicht eine große Varianz des einfallenden Lichtes gegeben ist. Gleichzeitig ist eine hohe Empfindlichkeit gefordert, weil gerade bei hoher Reichweite das Nutzsignal gegenüber dem Umgebungslicht verhältnismäßig schwach sein kann. Somit ist an den Lichtempfänger die dreifache Bedingung von hoher Dynamik, hoher Empfindlichkeit und geringen Kosten gestellt, die er nicht gleichzeitig erfüllen kann.

In der Sicherheitstechnik stellt sich die zusätzliche Anforderung einer sicheren Entfernungsbestimmung. Diese soll also unter allen Bedingungen zuverlässig sein. Dazu wird herkömmlich der Lichtschwerpunkt entweder in redundanten Recheneinheiten auf dem gleichen Rechenweg oder in derselben Recheneinheit auf unterschiedlichen Rechenwegen bestimmt. Systematische Fehler oder Ungenauigkeiten bei der Entfernungsbestimmung können dadurch nicht aufgefangen werden.

Die DE 197 32 376 C1 lehrt eine Abstandsmessung nach dem Triangulationsprinzip, bei dem mehrere Laserlichtquellen als Sender vorgesehen sind, welche durch je eine eigene Linse auf unterschiedliche Messentfernungen fokussiert werden und die somit erzeugten mehrfachen Tastflecken auf dem positionsempfindlichen Detektor des Sensors als konzentrische Kreise unterschiedlichen Durchmessers abbilden. Die Lichtquellen werden unterschiedlich moduliert, so dass sie aus der konzentrischen Überlagerung einzeln identifiziert werden können, und bei der Abstandsmessung wird jeweils der Messlichtfleck mit dem kleinsten Durchmesser ausgewertet, um Messungenauigkeiten durch die Tastfleckgröße zu minimieren.

Die DE 100 59 156 A1 beschreibt einen Triangulationssensor mit einem Messkanal und einem Zusatzkanal. Die Intensitätsverläufe der empfangenen Lichtsignale in den beiden Kanälen werden untersucht, um den Tastfleck nach verschiedenen Kriterien von Störreflexen zu unterscheiden und dann die Entfernung aus der Lage des so bestimmten empfangenen Tastflecks zu ermitteln.

In der US 4,637,715 wird zur passiven Triangulation mit nur einem Bildaufnehmer und einer Linse ein Reflektor vor der Linse angeordnet. Ein Bildpunkt wird somit zweifach aufgenommen, wobei auf den üblichen zweiten Bildaufnehmer und die zweite Linse verzichtet wird.

Aus der DE 10220037 B4 ist ein Triangulationssensor bekannt, dessen Empfangsoptik zwei unterschiedliche Linsen für den Fernbereich und den Nahbereich aufweist. Die besondere Gestalt der Linse für den Nahbereich stellt dabei einen auch bei unterschiedlicher Entfernung einigermaßen gleich großen Lichtfleck sicher und sorgt dafür, dass bei besonders geringen Entfernungen im Nahbereich der Lichtfleck nicht aus dem Lichtempfänger herauswandert. Damit wird aber weder das Problem einer sicheren Entfernungsbestimmung noch die Anforderung an den Lichtempfänger verbessert.

Es ist daher Aufgabe der Erfindung, einen Sensor nach dem Prinzip der Triangulation zur Verfügung zu stellen, der sicher und kostengünstig ist.

Diese Aufgabe wird durch einen Sensor gemäß Anspruch 1 sowie ein Verfahren gemäß Anspruch 10 gelöst. Diese Lösung hat den Vorteil, dass eine Redundanz nicht nur in der Algorithmik, der Implementierung oder den Auswertungseinheiten vorliegt, sondern dass zwei verschiedene physikalische Merkmale zur sicheren Abstandsermittlung mit besonders hoher Zuverlässigkeit verwendet werden. Dies dient nicht nur in der Sicherheitstechnik zur Absicherung der Entfernungsbestimmung, sondern ganz allgemein zu einer wesentlich genaueren Ermittlung der Entfernungen. Die beiden auf unterschiedliche Weise gewonnenen Entfernungen können zur Überprüfung der Plausibilität miteinander verglichen oder zur Erhöhung der Genauigkeit miteinander verrechnet werden, beispielsweise durch Durchschnittsbildung.

Die erfinderische Lösung beruht auf dem Prinzip, die Nützlichkeit der unterschiedlichen Lichtfleckformen zu erkennen, die durch eine Erfüllung der Scheimpflugregeln und weitere Maßnahmen wie beispielsweise Optimierung der Empfangsoptiken stets vermieden werden sollen. Die Auswertung unterschiedlicher Lichtfleckformen wird dann neben eine Auswertung der Lichtfleckposition gestellt, um die Genauigkeit der Entfernungsbestimmung zu erhöhen, beziehungsweise um sie sicher zu machen.

In vorteilhafter Weiterbildung weist der Lichtempfänger eine Empfangsoptik insbesondere mit einem auf die Wellenlänge des Lichtsenders abgestimmten Interferenzfilter auf. Die Empfangsoptik sorgt für eine genauere Position und schärfere Lichtfleckbestimmung. Der Interferenzfilter schneidet zumindest dasjenige Umgebungslicht ab, das außerhalb der Wellenlänge des Lichtsenders liegt. Da für den Lichtsender für gewöhnlich eine relativ schmalbandige Wellenlänge des ultravioletten, sichtbaren oder infraroten Bereichs gewählt wird, kann auf diese Weise ein großer Anteil des Umgebungslichtes schon vor Auftreffen auf dem Lichtempfänger ausgefiltert werden.

Bevorzugt ist der Lichtempfänger für den Empfang von Licht in einer Ebene ausgebildet, die gegen eine Bildebene gemäß der Scheimpflug-Ausrichtung um einen Verkippungswinkel verkippt ist. Mit der Scheimpflug-Ausrichtung versucht man, den Lichtfleck eines Objekts aus beliebiger Entfernung scharf und damit die Form des Lichtflecks nur schwach entfernungsabhängig abzubilden. Durch ein absichtliches Abweichen von dieser herkömmlich als optimal empfundenen Ausrichtung wird die Entfernungsabhängigkeit der Form des Lichtflecks vergrößert und damit die Entfernungsbestimmung vereinfacht und genauer gemacht. Der Verkippungswinkel ist insbesondere so gewählt, dass der Lichtempfänger in der Brennebene der Empfangsoptik liegt. Damit wird der Effekt der Lichtfleckvergrößerung in Abhängigkeit von der Entfernung besonders gut ausgenutzt.

Dabei ist besonders bevorzugt der Verkippungswinkel derart gewählt, dass eine fiktive konstante Lichtquelle je Flächeneinheit aus jeder Entfernung innerhalb des Überwachungsbereichs im Wesentlichen dieselbe Lichtenergie deponiert. Diese Konstellation kann durch intrafokale Verkippung erreicht werden, mit andern Worten eine Ausrichtung des Lichtempfängers in der Brennebene, also einer Ebene parallel zu der Empfangsoptik, die durch deren Brennpunkt geht. Es ist nicht zu verhindern und soll gar nicht verhindert werden, dass aus dem Nahbereich mehr Licht remittiert wird als aus dem Fernbereich. Bei der genannten Ausgestaltung ist aber die von jedem Element des Lichtempfängers empfangene Lichtmenge entfernungsunabhängig. Dadurch sind die Dynamikanforderungen an den Lichtempfänger erheblich reduziert, und es kann ein kostengünstiger Lichtempfänger eingesetzt werden. Derartige weniger dynamische Lichtempfänger bleiben selbst dann verhältnismäßig kostengünstig, wenn sie hoch empfindlich sind. Die intrafokale Verkippung hat auch noch den Vorteil einer kompakteren Bauweise, wenn Empfangsoptik und Lichtempfänger ein gemeinsames Bauteil bilden. Durch die parallele Ausrichtung von Lichtempfänger und Empfangsoptik hat dieses gemeinsame Bauteil eine geringere Tiefe.

In einer weiteren bevorzugten Ausführungsform kann die Auswertungseinheit die Entfernung aus einem gewichteten Mittel der über die Position und der über die Form bestimmten Entfernung bestimmen, wobei insbesondere in einem Nahbereich die Form und in einem Fernbereich die Position mit einem höheren Gewichtungsfaktor bewertet wird. Gerade bei der intrafokalen Ausrichtung, aber auch allgemein ist bei größeren Entfernungen der Lichtfleck klein, und es lässt sich somit der Schwerpunkt gut und die Größe des Lichtflecks nur schwer bestimmen. Im Nahbereich ist es gerade umgekehrt. Bei einer Mittelung gemäß dieser Ausführungsform wird also die jeweils genauere Bestimmung stärker gewichtet und somit insgesamt eine bessere Abstandsermittlung ermöglicht.

Vorteilhafterweise kann die Auswertungseinheit anhand eines Modells der Abbildungsfehler im Nahbereich die Form korrigieren. Ein Teil der Form des Lichtflecks ist nämlich im Nahbereich nicht durch die Entfernung, sondern durch Abbildungsfehler der Linse bedingt. Eine Berücksichtigung dieses verfälschenden Anteils erhöht damit erneut die Genauigkeit der Abstandsermittlung.

Bevorzugt ist der Sensor ein Flächentaster für zumindest einen Teilbereich eines als Ebene ausgebildeten Überwachungsbereichs. Die Überwachung einer Fläche ist für die meisten Anwendungen gerade im Bereich der Sicherheitstechnik nützlich oder gar erforderlich, bei der es um die Absicherung eines für Bedienpersonal gefährlichen Bereiches geht.

Vorteilhafterweise ist der Lichtsender ein Laser oder eine Leuchtdiode zur Erzeugung einer Beleuchtungslinie insbesondere mit einem strukturierten Beleuchtungsmuster. Gerade im Falle einer Ebene als Überwachungsbereich wird diese dann in einer die Triangulation erleichternden Weise ausgeleuchtet.

Das erfindungsgemäße Verfahren kann mit analogen Merkmalen fortgebildet werden, wie sie beispielhaft, aber nicht abschließend in den sich anschließenden Unteransprüchen angegeben sind, und zeigt dabei ähnliche Vorteile.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Seitenansicht einer ersten Ausführungsform der Erfindung, die auch die Stellung und Verkippung des Lichtempfängers erläutert;
- Fig. 2: eine schematische Darstellung zur Erläuterung der beiden Merkmale Schwerpunkt und Form eines Lichtflecks auf dem Lichtempfänger; und
- Fig. 3: eine dreidimensionale Ansicht von schräg vorn auf Lichtsender und Lichtempfänger einer zweiten Ausführungsform der Erfindung zur Erläuterung der überwachten Sektoren einer Überwachungsebene.

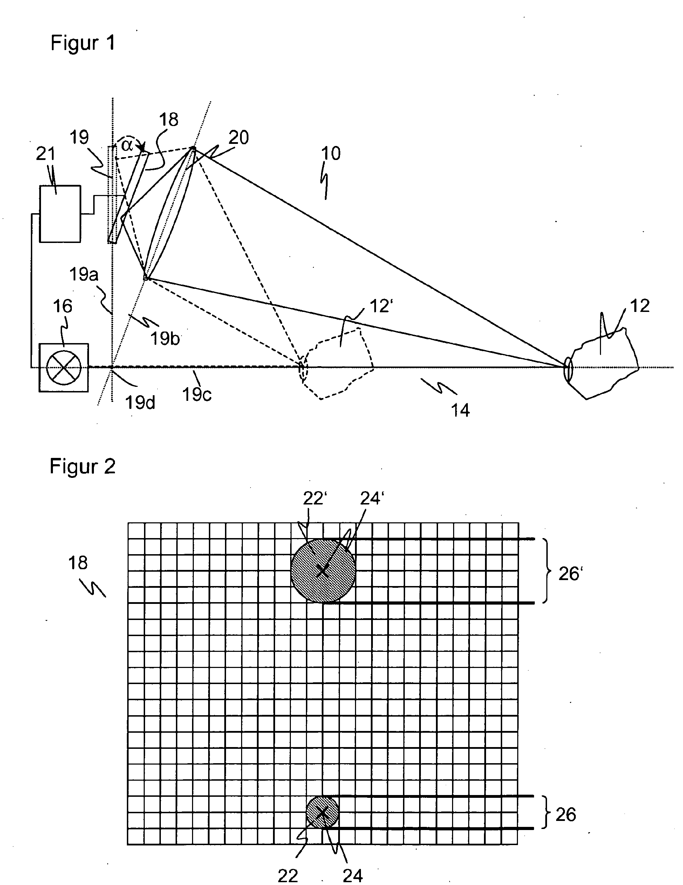

Figur 1 zeigt eine Seitenansicht eines Sensors 10 gemäß einer ersten Ausführungsform der Erfindung. Der Sensor 10 dient der Erfassung und Abstandsermittlung von Objekten 12, 12' in einem Überwachungsbereich 14. Der Sensor 10 kann beispielsweise zur Diebstahlsicherung oder in der Fabrikautomation eingesetzt sein. Ein bevorzugtes Einsatzgebiet ist die Sicherheitstechnik. In diesem Fall ist der Überwachungsbereich 14 ein Bereich, der frei bleiben soll und den insbesondere Bedienpersonal nicht betreten oder mit einem Körperteil berühren darf, etwa weil der Überwachungsbereich 14 vor einer gefährlichen Maschine liegt. Mit Hilfe der Abstandsermittlung kann der Überwachungsbereich 14 in Teilbereiche unterteilt werden, beispielsweise kann bis zu einer bestimmten Entfernung ein Eingriff lediglich zu einem Warnsignal, bei weiterer Verkürzung auf einen weiteren vorgegebenen Höchstabstand aber zu einem unmittelbaren Abschalten der gefährlichen Maschine führen.

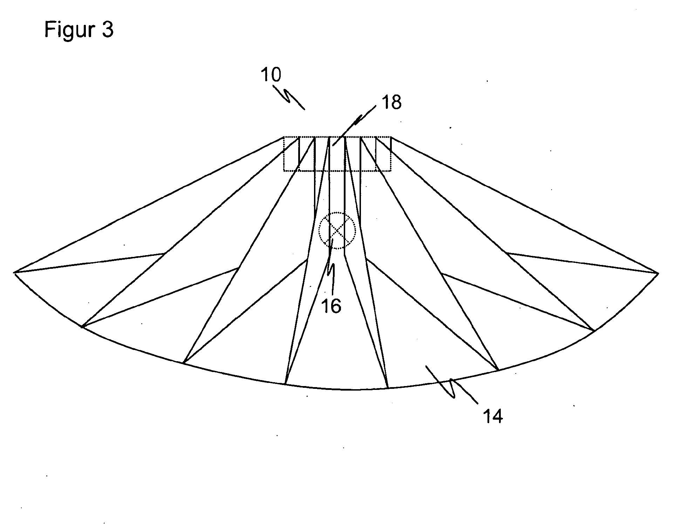

Ein Lichtsender 16 strahlt Licht im sichtbaren, infraroten oder ultravioletten Bereich in den Überwachungsbereich 14. Bei der Ausführungsform gemäß Figur 1 ist der Überwachungsbereich 14 eine Linie, so dass zum Ausleuchten ein einzelner Lichtstrahl des Lichtsenders 16 genügt. Wie auch im Zusammenhang mit Figur 3 weiter unten noch erläutert, kann der Überwachungsbereich 14 aber auch eine Ebene sein und die Figur 1 dann als Querschnittzeichnung verstanden werden. Schließlich ist auch ein dreidimensionaler Überwachungsbereich 14 denkbar. Der Lichtsender 16 ist in jedem Fall für die Ausleuchtung des entsprechenden Überwachungsbereichs 14 ausgebildet.

Als Lichtsender 16 kann jede Lichtquelle eingesetzt werden. Bevorzugt ist aber eine Halbleiterlichtquelle wie ein Laser oder eine Leuchtdiode. Ist der Überwachungsbereich 14 eine Ebene, so kann ein Laserstrahl über eine bewegliche Umlenkoptik zu einer Laserlinie verschmiert werden, welche diese Ebene ausleuchtet. Alternativ ist eine strahlformende Optik vor dem Lichtsender 16 denkbar, die das Licht auf den Überwachungsbereich 14 fokussiert. Diese Optik kann eine Linse, aber auch ein diffraktives optisches Element sein. Im letzteren Fall ist auch möglich, ein strukturiertes Beleuchtungsmuster etwa aus Punkten oder dergleichen zu erzeugen.

Etwas versetzt zu dem Lichtsender 16 ist ein Lichtempfänger 18 angeordnet. Diesem Lichtempfänger 18 ist eine Empfangsoptik 20 zugeordnet. In der Praxis befinden sich Lichtsender 16, Lichtempfänger 18 und Empfangsoptik 20 zumeist in einem gemeinsamen Gehäuse mit einer lichtdurchlässigen Frontscheibe und bilden somit gemeinsam den Sensor 10. Die Größenverhältnisse in Figur 1 sind in den meisten Anwendungsfällen anders, besonders ist die dargestellte Entfernung des Fernbereichs zu gering und der Sichtwinkel des Lichtempfängers 18 eher zu groß.

Der Lichtempfänger 18 ist ortsauflösend, das heißt er kann aus einer ortsauflösenden Photodiode (PSD, position sensing diode) oder einem Empfangschip mit einzelnen Lichtempfangselementen oder Pixeln bestehen. Solche pixelaufgelösten Empfangschips werden als CCD- oder CMOS-Chips hergestellt. CCD-Chips können kostengünstig eine hohe Empfindlichkeit liefern, weisen aber einen verhältnismäßig geringen Dynamikbereich auf. Wird der CCD-Chip in die Sättigung getrieben, so kann ein sogenanntes "Blooming" auftreten. Dabei spricht das übersättigte Signal in Ausleserichtung auf benachbarte Pixel über und bildet somit Blüten auf dem Lichtempfänger 18, die eine sinnvolle Auswertung der Form des Lichtflecks unmöglich machen. Umgekehrt haben CMOS-Chips einen hohen Dynamikbereich, aber auch ein verhältnismäßig hohes Rauschen, was ihre Empfindlichkeit herabsetzt. Gerade bei größeren Reichweiten des Sensors 10 ist aber zur Unterscheidung von Nutzlicht und Umgebungslicht eine hohe Empfindlichkeit notwendig.

Das Prinzip der Entfernungsbestimmung mittels Triangulation wird nun anhand eines in Figur 1 mit durchgezogenen Linien dargestellten entfernteren Objekts 12 und eines mit gestrichelten Linien dargestellten näheren Objektes 12' erläutert. Das Licht des Lichtsenders 16 wird an dem Objekt 12, 12' remittiert, von der Linse 20 fokussiert und in einem Lichtfleck auf dem Lichtempfänger 18 gebündelt. Die unterschiedliche Entfernung der Objekte 12, 12' schlägt sich dabei in einer unterschiedlichen Position des Lichtflecks auf dem Lichtempfänger 18 nieder. Bei der in der Figur 1 dargestellten Anordnung erzeugt ein entfernteres Objekt 12 einen Lichtfleck weiter unten und ein näheres Objekt 12' einen Lichtfleck weiter oben auf dem Lichtempfänger 18. Da die geometrischen Daten wie Basisabstand zwischen Lichtsender 16 und Lichtempfänger 18, Abbildungseigenschaften der Linse 20 oder Größe des Lichtempfängers 18 bekannt sind, kann die Entfernung des Objektes 12, 12' in einer Auswertungseinheit 21 berechnet ("trianguliert") werden.

Der Lichtempfänger 18 ist erfindungsgemäß intrafokal angeordnet, liegt also in der Brennebene der Linse 20. Somit wird nur ein Objekt 12 in idealisierter unendlicher Reichweite mit einem scharfen Lichtfleck auf dem Lichtempfänger 18 abgebildet. Ein näheres Objekt 12' erzeugt einen mit zunehmender Nähe größeren Lichtfleck.

In der Figur 1 ist zum Vergleich mit gestrichelten Linien die Anordnung des Lichtempfängers 19 gemäß Stand der Technik eingezeichnet. Diese Anordnung ist so gewählt, dass Lichtempfangsebene 19a, Abbildungsoptikebene 19b der Linse 20 und Objektebene 19c, die mit dem Überwachungsbereich 14 zusammenfällt, sich in einer gemeinsamen Gerade 19d (Durchgangspunktpunkt der senkrecht zur Papierebene stehenden Geraden) schneiden. Damit ist die Scheimpflugregel erfüllt, und gerade der Überwachungsbereich 14 wird scharf auf dem Lichtempfänger 19 abgebildet. Die Größe des Lichtflecks auf dem Lichtempfänger 19 ist damit gewollt möglichst schwach abhängig von der Entfernung des Objekts 12, 12'. Die Anordnung des Lichtempfängers 18 kann also auch so ausgedrückt werden, dass der erfindungsgemäße Lichtempfänger 18 gegenüber dem nach dem Stand der Technik angeordneten Lichtempfänger 9 gemäß der Scheimpflugregel um einen Winkel α verkippt ist. Die intrafokale Verkippung verwirklicht die Vorteile der Erfindung am besten, dennoch sind aber auch andere Winkel α denkbar.

Die Entfernungsbestimmung in der Auswertungseinheit 21 wird nunmehr anhand der Figur 2 näher erläutert, in der wie auch im folgenden gleiche Merkmale mit gleichen Bezugszeichen gekennzeichnet sind. Dort ist der Lichtempfänger 18 in einer Vorderansicht als Matrix aus einzelnen Lichtempfangselementen gezeigt. In den unteren Bereich des Lichtempfängers 18 fällt ein grau dargestellter Lichtfleck 22 des Objektes 12 im Fernbereich. Entsprechend fällt in den oberen Bereich des Lichtempfängers 18 ein Lichtfleck 22' des Objekts 12'. Die Auswertungseinheit 21 bestimmt nun zwei Merkmale dieser Lichtflecken 22, 22', nämlich deren Schwerpunkt 24, 24' und deren Form. Wie deutlich zu erkennen, ist der Lichtfleck 22' eines Objektes 12' im Nahbereich größer als der Lichtfleck 22 eines Objekts 12 im Fernbereich. Diese Form kann auf unterschiedliche Weisen ausgewertet werden, als einfaches Kriterium bietet sich der Durchmesser 26, 26' an. Die Auswertungseinheit 21 kann die Entfernung also auf zwei völlig unterschiedlichen Wegen bestimmen: zum einen aus der Lage des Schwerpunkts 24, 24' und zum anderen aus der Form beziehungsweise dem Durchmesser 26, 26' des Lichtflecks 22, 22'.

Diese beiden Entfernungen stimmen im Idealfall überein. Sie können von der Auswertungseinheit 21 somit gegenseitig zur Überprüfung der Plausibilität verwendet werden. Alternativ oder zusätzlich kann die endgültige Entfernung aus den beiden Entfernungen berechnet werden. Da im Fernbereich der Lichtfleck 22 klein ist, kann sein Schwerpunkt 24 sehr genau bestimmt werden. Der Durchmesser 26 überdeckt nur wenige Pixel und kann daher auch nur mit einer gewissen Präzision bestimmt werden. Im Fernbereich ist also der Schwerpunkt das bessere Maß. Um überhaupt den Durchmesser 26, 26' in jeder Entfernung sinnvoll messen zu können, sollte der Lichtfleck 22' auch bei maximaler Reichweite des Sensors 10 zumindest noch zwei Pixel überstreichen.

Umgekehrt ist im Nahbereich der Lichtfleck 22' groß, so dass sein Durchmesser 26' recht genau bestimmt werden kann, sein Schwerpunkt 24' im Vergleich zum Fernbereich nur relativ ungenau die Lage des Lichtflecks 22' beschreibt, wenn er nicht wie idealisiert dargestellt symmetrisch ist. Demnach ist im Nahbereich der Durchmesser das bessere Maß. Dieser Erkenntnis trägt die Erfindung dadurch Rechnung, dass die Erfindung in einer Ausführungsform ein gewichtetes Mittel aus den beiden Entfernungen bildet, bei dem im Fernbereich der Schwerpunkt und im Nahbereich der Durchmesser mit einem höheren Gewichtungsfaktor bewertet wird.

Indem erfindungsgemäß der Lichtempfänger 18 intrafokal angeordnet ist und somit absichtlich unterschiedliche Größen der Lichtflecken 22, 22' zulässt, wird neben der genaueren Entfernungsbestimmung noch ein weiterer großer Vorteil, nämlich hinsichtlich der erforderlichen Dynamik des Lichtempfängers 18 erreicht. Mit der Entfernung des Objektes 12, 12' nimmt die empfangene Lichtenergie remittierten Lichts auf dem Lichtempfänger 18 quadratisch ab. Gleichzeitig reduziert sich linear der Durchmesser des Lichtflecks 22, 22', somit nimmt die vom Lichtfleck überstrichene Fläche auf dem Lichtempfänger 18 ebenfalls quadratisch ab. Jeder einzelne Pixel, der von dem Lichtfleck 22, 22' getroffen ist, nimmt damit entfernungsunabhängig ungefähr die gleiche Lichtmenge auf. Je Fläche auf dem Lichtempfänger 18 ist also die eingestrahlte Lichtmenge entfernungsunabhängig, nimmt man die Lichtquelle als konstant an. Da die Reflexionseigenschaften des Objektes 12, 12' variieren können und die Annahme einer konstanten Lichtquelle somit nicht zutrifft, ist zwar immer noch ein Dynamikbereich des Lichtempfängers 18 erforderlich, dieser ist aber erheblich reduziert. Somit können insbesondere CCD-Chips mit ihrem verhältnismäßig geringen Dynamikbereich unter Ausnutzung von ihrer hohen Empfindlichkeit und damit im Vergleich zu CMOS-Chips größeren maximaler Reichweite des Sensors 10 eingesetzt werden.

Die Abbildungsoptik 20 hat im Nahbereich Abbildungsfehler, die zu nicht mehr kreisförmiger Abbildung eines Lichtpunkts und zu einem Durchbrechen der umgekehrten Proportionalität des Durchmessers zu der Objektentfernung führt. Die Auswertungseinheit 21 kann in einer weiteren Ausführungsform mit derartigen Modellen der Abbildungsfehler programmiert werden oder die Abbildungsfehler in einer Einlernphase bestimmen, um sie dann im Betrieb bei der Entfernungsbestimmung herausrechnen zu können.

Für Anwendungen in der Sicherheitstechnik findet die Auswertung in der Auswertungseinheit 21 entweder in zwei unterschiedlichen Recheneinheiten oder mit unterschiedlichen Algorithmen in derselben Recheneinheit statt. Dabei können die beiden Merkmale Schwerpunkt und Durchmesser zeitgleich, nacheinander oder auch redundant mehrfach hintereinander berechnet werden.

Figur 3 zeigt in einer dreidimensionalen Darstellung von schräg oben eine zweite Ausführungsform der Erfindung mit einer Ebene als Überwachungsbereich 14. Von dem Flächensensor 10 sind vereinfachend nur Lichtsender 16 und Lichtempfänger 18 dargestellt. Der Lichtempfänger 18 ist in Spalten unterteilt, wobei jede Spalte für die Überwachung eines Teilsektors des Überwachungsbereichs 14 vorgesehen ist. Zur Erhöhung der Genauigkeit können mehr Teilsektoren und entsprechend mehr Spalten des Lichtempfängers 18 vorgesehen sein. Jede Spalte des Lichtempfängers 18 ist für sich ortsauflösend (in Figur 3 in der Vertikalen), beispielsweise eine PSD, eine Zeile oder eine Matrix aus Pixelelementen.

In jeder Spalte und jedem Teilsektor arbeitet der Flächensensor 10 ganz analog der ersten Ausführungsform, die anhand der Figuren 1 und 2 beschrieben worden ist. Die Breite jedes Teilsektors schlägt sich dabei in einer kleinen Ungenauigkeit bei der Entfernungsbestimmung nieder, die durch weitere Spalten des Lichtempfängers 18 zu jeder gewünschten Auflösung verringert werden kann. Der Lichtsender 16 beleuchtet linienförmig die Ebene des Überwachungsbereichs 14. Dabei erzeugt der Lichtsender 16 bevorzugt eine Struktur wie Punkte oder andere Muster, anhand derer die einzelnen Teilesektoren des Überwachungsbereiches 14 identifiziert werden können, um die Triangulation in der Auswertungseinheit 21 zu erleichtern. Die Auswertungseinheit 21 kennt dann zwar nicht die genaue Lage des Musters auf dem Lichtempfänger 18, die durch die Abbildung verzerrt ist, sehr wohl aber die relative Anordnung. Beispielsweise bleibt der am rechten Rand gelegene Beleuchtungspunkt oder der sonstige am rechten Rand gelegene Musterabschnitt des Lichtsenders 16 auch nach Abbildung am weitesten rechts (oder links, sofern die Optik für eine Spiegelung sorgt).

Die Erfindung erreicht durch die intrafokale Verkippung eine echte redundante Entfernungsbestimmung anhand zweier physikalisch unterschiedlicher Merkmale. Dadurch ist der Sensor 10 sicher. Die Entfernungsbestimmung ist wesentlich genauer. Die Signaldynamik über den Objektabstand wird deutlich geglättet, ohne einer teuren Spezialoptik zu bedürfen. Somit können für den Lichtempfänger 18 Bildsensoren mit hoher Empfindlichkeit verwendet werden, ohne die sich durch Sättigung ergebenden Probleme zu erzeugen ("Blooming"). Diese für große Reichweiten notwendige hohe Empfindlichkeit kann kostengünstig nur mit CCD-Technologie erreicht werden, wo die erfindungsgemäße reduzierte Dynamik den Einsatz ohne derartige Sättigungsprobleme ermöglicht.

Die beiden für die Entfernungsbestimmung ausgewerteten Merkmale haben gerade komplementäre Stärken und Schwächen im Nah- und Fernbereich. Die Erfindung vermag beide Vorteile zu kombinieren. Schließlich wird durch die intrafokale Verkip pung auch noch die Baugröße eines Bauteils aus Lichtempfänger 18 und Empfangsoptik 20 verringert.

## Patentansprüche

1. Optoelektronischer Sensor (10) zur Erfassung und Abstandsbestimmung eines Objekts (12, 12') in einem Überwachungsbereich (14) mit einem Lichtsender (16) und einem ortsauflösenden Lichtempfänger (18) zum Empfangen von dem Objekt (12, 12') remittierten Lichts des Lichtsenders (16), wobei eine Auswertungseinheit (21) dafür ausgebildet ist, aus der Position (24, 24') des empfangenen Lichts auf dem Lichtempfänger (18) nach dem Prinzip der Triangulation die Entfernung des Objekts (12, 12') zu bestimmen, **dadurch gekennzeichnet, dass** die Auswertungseinheit (21) weiter dafür ausgebildet ist, zusätzlich aus der Form; insbesondere dem Durchmesser (26, 26') des Lichtflecks (22, 22') auf dem Lichtempfänger (18) die Entfernung des Objekts (12, 12') zu bestimmen und die derart auf unterschiedliche Weise gewonnenen Entfernungen zur Überprüfung der Plausibilität miteinander zu vergleichen oder zur Erhöhung der Genauigkeit miteinander zu verrechnen.

2. Sensor (10) nach Anspruch 1, **dadurch gekennzeichnet, dass** der Lichtempfänger (18) eine Empfangsoptik (20) insbesondere mit einem auf die Wellenlänge des Lichtsenders (16) abgestimmten Interferenzfilter aufweist.

3. Sensor (10) nach Anspruch 1 oder 2, **dadurch gekennzeichnet, dass** der Lichtempfänger (18) für den Empfang von Licht in einer Ebene ausgerichtet ist, die gegen eine Bildebene (19a) gemäß der Scheimpflug-Ausrichtung um einen Verkippungswinkel (α) verkippt ist.

4. Sensor (10) nach Anspruch 2 und 3, **dadurch gekennzeichnet, dass** der Verkippungswinkel (α) so gewählt ist, dass der Lichtempfänger (18) in der Brennebene der Empfangsoptik (20) liegt.

5. Sensor (10) nach Anspruch 3, **dadurch gekennzeichnet, dass** der Verkippungswinkel (α) derart gewählt ist, dass eine fiktive konstante Lichtquelle je Flächeneinheit aus jeder Entfernung innerhalb des Überwachungsbereichs (14) im Wesentlichen dieselbe Lichtenergie deponiert.

6. Sensor (10) nach einem der vorhergehenden Ansprüche, **dadurch gekennzeichnet, dass** die Auswertungseinheit (21) die Entfernung aus einem gewichteten Mittel der über die Position (24, 24') und der über die Form (26, 26') bestimmten Entfernung bestimmen kann, wobei insbesondere in einem Nahbereich die Form (26, 26') und in einem Fernbereich die Position (24, 24') mit einem höheren Gewichtungsfaktor bewertet wird.

7. Sensor (10) nach einem der vorhergehenden Ansprüche, **dadurch gekennzeichnet, dass** die Auswertungseinheit (21) anhand eines Modells der Abbildungsfehler im Nahbereich die Form (26, 26') korrigieren kann.

8. Sensor (10) nach einem der vorhergehenden Ansprüche, **dadurch gekennzeichnet, dass** der Sensor (10) ein Flächentaster für zumindest einen Teilbereich eines als Ebene ausgebildeten Überwachungsbereichs (14) ist.

9. Sensor (10) nach einem der vorhergehenden Ansprüche, **dadurch gekennzeichnet, dass** der Lichtsender (16) ein Laser oder eine Leuchtdiode zur Erzeugung einer Beleuchtungslinie insbesondere mit einem strukturierten Beleuchtungsmuster ist.

10. Verfahren zur Erfassung und Abstandsbestimmung eines Objekts (12, 12') in einem Überwachungsbereich (14) mit einem Lichtsender (16) und einem ortsauflösenden Lichtempfänger (18) zum Empfangen von dem Objekt (12, 12') remittierten Lichts des Lichtsenders (16), wobei die Entfernung des Objekts (12, 12') aus der Position (24, 24') des empfangenen Lichts auf dem Lichtempfänger (18) nach dem Prinzip der Triangulation bestimmt wird, **dadurch gekennzeichnet, dass** zusätzlich aus der Form, insbesondere dem Durchmesser (26, 26') des Lichtflecks (22, 22') auf dem Lichtempfänger (18) die Entfernung des Objekts (12, 12') bestimmt wird und dass die derart auf unterschiedliche Weise gewonnenen Entfernungen zur Überprüfung der Plausibilität miteinander verglichen oder zur Erhöhung der Genauigkeit miteinander verrechnet werden.

11. Verfahren nach Anspruch 10, **dadurch gekennzeichnet, dass** das Licht in einer Ebene empfangen wird, die gegen eine Bildebene (19a) gemäß der Scheimpflug-Ausrichtung um einen Verkippungswinkel (α) verkippt ist.

12. Verfahren nach Anspruch 11, **dadurch gekennzeichnet, dass** der Verkippungswinkel (α) derart gewählt ist, dass eine fiktive konstante Lichtquelle je Flächeneinheit aus jeder Entfernung innerhalb des Überwachungsbereichs (14) im Wesentlichen dieselbe Lichtenergie deponiert.

13. Verfahren nach einem der Ansprüche 10 bis 12, **dadurch gekennzeichnet, dass** die Entfernung aus einem gewichteten Mittel der über die Position (24, 24') und der über die Form (26, 26') bestimmten Entfernung ermittelt wird, wobei insbesondere in einem Nahbereich die Form (26, 26') und in einem Fernbereich die Position (24, 24') mit einem höheren Gewichtungsfaktor bewertet wird.

## Claims

1. An optoelectronic sensor (10) for the detection and distance measurement of an object (12, 12') in a monitored zone (14) comprising a light transmitter (16) and a spatially resolving light receiver (18) for the reception of light of the light transmitter (16) remitted by the object (12, 12'), wherein an evaluation unit (21) is made to determine the distance of the object (12, 12') from the position (24, 24') of the received light on the light receiver (18) in accordance with the principle of triangulation, **characterised in that** the evaluation unit (21) is furthermore made to additionally determine the distance of the object (12, 12') from the shape, in particular from the diameter (26, 26") of the light spot (22, 22') on the light receiver (18) and to compare the distances gained in different manners in this way with one another in order to check the plausibility or to mutually compensate them in order to increase the precision.

2. A sensor (10) in accordance with claim 1, **characterised in that** the light receiver (18) has an optical receiving system (20), in particular having an interference filter matched to the wavelength of the light transmitter (16).

3. A sensor (10) in accordance with claim 1 or claim 2, **characterised in that** the light receiver (18) is aligned for the reception of light in a plan which is tilted by a tilt angle (α) with respect to an image plane (19a) in accordance with the Scheimpflug alignment.

4. A sensor (10) in accordance with claim 2 and claim 3, **characterised in that** the tilt angle (α) is selected such that the light receiver (18) is in the focal plane of the optical receiving system (20).

5. A sensor (10) in accordance with claim 3, **characterised in that** the tilt angle (α) is selected such that a fictitious constant light source substantially deposits the same light energy per surface unit from every direction within the monitored zone (14).

6. A sensor (10) in accordance with any one of the preceding claims, **characterised in that** the evaluation unit (21) can determine the distance from a weighted mean of the distance determined via the position (24, 24') and of the distance determined via the shape (26, 26'), with the shape (26, 26') in particular being evaluated with a higher weighting factor in a near zone and with the position (24, 24') in particular being evaluated with a higher weighting factor in a far zone.

7. A sensor (10) in accordance with any one of the preceding claims, **characterised in that** the evaluation unit (21) can correct the shape (26, 26') with reference to a model of the aberrations in the near zone.

8. A sensor (10) in accordance with any one of the preceding claims, **characterised in that** the sensor (10) is a surface sensor for at least one part region of a monitored zone (14) made as a plane.

9. A sensor (10) in accordance with any one of the preceding claims, **characterised in that** the light transmitter (16) is a laser or a light emitting diode for the generation of an illumination line, in particular with a structured illumination pattern.

10. A method for the detection and distance determination of an object (12, 12') in a monitored zone (14) comprising a light transmitter (16) and a spatially resolving light receiver (18) for the reception of light of the light transmitter (16) remitted by the object (12, 12'), wherein the distance of the object (12, 12') is determined from the position (24, 24') of the received light on the light receiver (18) in accordance with the principle of triangulation, **characterised in that** the distance of the object (12, 12') is additionally determined from the shape, in particular from the diameter (26, 26") of the light spot (22, 22') on the light receiver (18); and **in that** the distances gained in different manners in this way are compared with one another in order to check the plausibility or are mutually compensated in order to increase the precision.

11. A method in accordance with claim 10, **characterised in that** the light is received in a plane which is tilted by a tilt angle (α) with respect to an image plane (19a) in accordance with the Scheimpflug alignment.

12. A method in accordance with claim 11, **characterised in that** the tilt angle (α) is selected such that a fictitious constant light source substantially deposits the same light energy per surface unit from every direction within the monitored zone (14)

13. A method (10) in accordance with any one of the claims 10 to 12, **characterised in that** the distance is determined from a weighted mean of the distance determined via the position (24, 24') and of the distance determined via the shape (26, 26'), with the shape (26, 26') in particular being evaluated with a higher weighting factor in a near zone and with the position (24, 24') in particular being evaluated with a higher weighting factor in a far zone.

## Revendications

1. Capteur optoélectronique (10) destiné à la détection et à la détermination de la distance d'un objet (12, 12') dans une zone de surveillance (14), avec un émetteur de lumière (16) et un récepteur de lumière (18) à résolution spatiale, destiné à recevoir la lumière de l'émetteur de lumière (16) renvoyée par l'objet (12, 12'), dans lequel une unité d'analyse (21) est conçue pour déterminer la distance de l'objet (12, 12') par triangulation à partir de la position (24, 24') de la lumière reçue sur le récepteur de lumière (18), **caractérisé en ce que** l'unité d'analyse est en outre conçue pour déterminer également la distance de l'objet (12, 12') à partir de la forme, en particulier le diamètre (26, 26'), de la tache lumineuse (22, 22') sur le récepteur de lumière (18) et pour comparer entre elles les distances ainsi obtenues de manières différentes afin d'en vérifier la plausibilité ou encore pour les combiner entre elles afin d'en augmenter la précision.

2. Capteur (10) selon la revendication 1, **caractérisé en ce que** le récepteur de lumière (18) possède une optique de réception (20), en particulier avec un filtre d'interférences adapté à la longueur d'onde de l'émetteur de lumière (16).

3. Capteur (10) selon la revendication 1 ou 2, **caractérisé en ce que** le récepteur de lumière (18) est orienté en vue de recevoir de la lumière dans un plan qui est basculé d'un angle de basculement (α) par rapport au plan de l'image (19a), selon la règle de Scheimpflug.

4. Capteur (10) selon les revendications 2 et 3, **caractérisé en ce que** l'angle de basculement (α) est choisi de manière à ce que le récepteur de lumière (18) se situe dans le plan focal de l'optique de réception (20).

5. Capteur (10) selon la revendication 3, **caractérisé en ce que** l'angle de basculement (α) est choisi de manière à ce qu'une source lumineuse constante fictive produise essentiellement la même énergie lumineuse par unité de surface, à toutes les distances comprises dans la zone de surveillance (14).

6. Capteur (10) selon l'une des revendications précédentes, **caractérisé en ce que** l'unité d'analyse (21) peut déterminer la distance à partir d'une moyenne pondérée de la distance déterminée par la position (24, 24') et par la forme (26, 26'), dans lequel un facteur de pondération supérieur est attribué à la forme (26, 26') dans un domaine proche et à la position (24, 24') dans un domaine lointain.

7. Capteur (10) selon l'une des revendications précédentes, **caractérisé en ce que** l'unité d'analyse (21) peut corriger la forme (26, 26') dans le domaine proche à l'aide d'un modèle de l'erreur d'aberration.

8. Capteur (10) selon l'une des revendications précédentes, **caractérisé en ce que** le capteur (10) est un capteur plat pour au moins une zone partielle dans une zone de surveillance (14) qui prend la forme d'un plan.

9. Capteur (10) selon l'une des revendications précédentes, **caractérisé en ce que** l'émetteur de lumière (16) est un laser (16) ou une diode luminescente destinés à produire une ligne d'éclairement, en particulier avec un motif d'éclairement structuré.

10. Procédé de détection et de détermination de la distance d'un objet (12, 12') dans une zone de surveillance (14), avec un émetteur de lumière (16) et un récepteur de lumière (18) à résolution spatiale, destiné à recevoir la lumière de l'émetteur de lumière (16) renvoyée par l'objet (12, 12'), dans lequel la distance de l'objet (12, 12') est déterminée par triangulation à partir de la position (24, 24') de la lumière reçue sur le récepteur de lumière (18), **caractérisé en ce que** la distance de l'objet (12, 12') est en outre déterminée à partir de la forme, en particulier le diamètre (26, 26'), de la tache lumineuse (22, 22') sur le récepteur de lumière (18) et **en ce que** les distances ainsi obtenues de manières différentes sont comparées entre elles afin d'en vérifier la plausibilité ou encore combinées entre elles afin d'en augmenter la précision.

11. Procédé selon la revendication 10, **caractérisé en ce que** la lumière est reçue dans un plan qui est basculé d'un angle de basculement (α) par rapport au plan de l'image (19a), selon la règle de Scheimpflug.

12. Procédé selon la revendication 11, **caractérisé en ce que** l'angle de basculement (α) est choisi de manière à ce qu'une source lumineuse constante fictive produise essentiellement la même énergie lumineuse par unité de surface, à toutes les distances comprises dans la zone de surveillance (14).

13. Procédé selon l'une des revendications 10 à 12, **caractérisé en ce que** la distance est déterminée à partir d'une moyenne pondérée de la distance déterminée par la position (24, 24') et par la forme (26, 26'), dans lequel un facteur de pondération supérieur est attribué à la forme (26, 26') dans un domaine proche et à la position (24, 24') dans un domaine lointain.
